**Europäisches Patentamt**

**European Patent Office**

**Office européen des brevets**

(19)

(11) Veröffentlichungsnummer: **0 237 036**
**B1**

(12) **EUROPÄISCHE PATENTSCHRIFT**

(45) Veröffentlichungstag der Patentschrift:
18.10.89

(51) Int. Cl.⁴: **B60R 13/04**

(21) Anmeldenummer: **87103450.0**

(22) Anmeldetag: **10.03.87**

(54) Profilkörper, insbesondere Profilleiste.

(30) Priorität: **12.03.86 DE 3608223**

(43) Veröffentlichungstag der Anmeldung:
**16.09.87 Patentblatt 87/38**

(45) Bekanntmachung des Hinweises auf die Patenterteilung:
**18.10.89 Patentblatt 89/42**

(84) Benannte Vertragsstaaten:
**AT BE CH DE ES FR GB IT LI LU NL SE**

(56) Entgegenhaltungen:
**WO-A-81/01270**
**DE-C- 1 286 920**

(73) Patentinhaber: **HÜHOCO Bandeisen- und Metallwalzwerk GmbH, Möddinghofe 31, D-5600 Wuppertal 2(DE)**

(72) Erfinder: **Jordan, Wolfgang Dr.Ing., Sachsenstr. 1a, D-5880 Luedenscheid(DE)**
Erfinder: **Becker, Heinrich, Adolf-Vorwerk-Str. 40, D-5600 Wuppertal-2(DE)**

(74) Vertreter: **Patentanwälte Dr. Solf & Zapf, Schlossbleiche 20 Postfach 13 01 13, D-5600 Wuppertal 1(DE)**

ACTORUM AG

## Beschreibung

Die vorliegende Erfindung betrifft einen Profilkörper, insbesondere Profilleiste, bestehend aus einem profilierten Trägerband aus Metall sowie aus einem auf diesen aufgebrachten Mantel aus Kunststoff oder Gummi, in dem Sollbruchstellen zum Abziehen mindestens eines Mantelstreifens und zum Freilegen eines darunter liegenden Zierabschnittes am Trägerband angeordnet sind.

Bei ummantelten Profilleisten, insbesondere für Personenkraftwagen, besteht oftmals die Forderung, daß in einem bestimmten Leistenabschnitt der fertigen Profilleiste keine Ummantelung vorhanden ist, so daß die blanke Oberfläche eines in der Profilleiste integrierten Metallträgerbandes in Erscheinung tritt, wodurch ein Zierstreifen entsteht. Herstellungstechnisch besteht hierbei das Problem, daß einerseits dieser Zierbereich in bezug auf seine Lage, seinen Verlauf und seine Abmessungen sehr exakt vorgegeben wird und demgemäß entsprechend auch hergestellt werden muß, und andererseits, daß die Ummantelung im Randbereich zum blanken Bereich fest mit dem Trägerband verbunden sein soll. Hierzu ist es bereits bekannt, siehe DE-PS 12 86 920, Profilleisten herzustellen, bei denen der äußere Mantelteil aus am Träger verbleibenden Kunststoffstreifen besteht, zwischen denen diese begrenzende Sollreißstellen vorgesehen sind, wobei in dem Bereich, wo die Kunststoffstreifen nicht abgezogen werden sollen, der Träger mit Perforierungen versehen ist. Durch diese Perforierungen kann beim Extrudieren der Kunststoff im plastischen oder fließfähigen Zustand eintreten, so daß sich der äußere Mantelteil mit dem inneren Material einheitlich verbinden kann und die Ummantelung mit dem Träger fest verbunden wird. Jedoch reicht diese feste Verbindung nicht bis unmittelbar in den Bereich der Längskanten des Zierstreifens nach dem Entfernen der Kunststoffstreifen, so daß die angrenzenden Längsränder des Mantels von spitzen Gegenständen hintergriffen werden können, so daß eine Beschädigung bzw. ein Abreißen des Mantels möglich ist.

Der Erfindung liegt nun die Aufgabe zugrunde, einen Profilkörper der eingangs beschriebenen Art derart zu verbessern, daß eine exakte Ausbildung und Positionierung des Zier- oder Funktionsstreifens bei der Herstellung möglich ist und eine feste Verbindung des Mantels bis unmittelbar an die Längskante des Zierstreifens gewährleistet wird, sowie weiterhin ein leichtes Entfernen des den Zier- oder Funktionsstreifen abdeckenden Mantelstreifens erhalten bleibt.

Erfindungsgemäß wird dies dadurch erreicht, daß der Mantel mindestens im Bereich außerhalb des zwischen den Sollbruchstellen angeordneten Mantelstreifens auf dem Trägerband durch eine haftvermittelnde Schicht fixiert ist, deren Haftkraft am Mantel und am Trägerband größer ist als die zum Abtrennen des Mantelstreifens erforderliche Kraft.

Erfindungsgemäß wird somit die Verbindung zwischen dem Mantel und dem Trägerband durch eine haftvermittelnde Schicht bewirkt, die eine durchgehende, innige Verbindung zwischen diesen beiden Teilen bis unmittelbar an die Sollbruchstellen heran gewährleistet, so daß hier nicht die Gefahr des Abreißens des Mantels an den Längskanten gegeben ist. Die haftvermittelnde Schicht kann vollflächig oder streifenförmig aufgebracht sein, wobei es wesentlich ist, daß der Bereich vor den Sollbruchstellen durchgehend mit der haftvermittelnden Schicht versehen ist. Die haftvermittelnde Schicht kann mit großer Genauigkeit und Gleichmäßigkeit auf das Trägerband aufgebracht werden, und zwar beispielsweise durch Aufstreichen, Aufrollen oder Aufsprühen. Gegenüber der bekannten formschlüssigen Verbindung hat die erfindungsgemäße kraftschlüssige Verbindung den Vorteil, daß einerseits eine durchgehende, unterbrechungsfreie Verbindung zwischen dem Trägerband und dem Mantel erreicht ist und andererseits sich eine kostengünstige Herstellung ergibt. Im Bereich zwischen den Sollbruchstellen, d. h. im Bereich des abtrenn- bzw. abreißbaren Mantelstreifens ist keine haftvermittelnde Schicht vorgesehen. Zusätzlich kann in diesem Bereich ein Trennmittel aufgebracht sein, das eine Haftung des Mantels auf dem Trägerband gänzlich verhindert.

Erfindungsgemäß kann es weiterhin vorteilhaft sein, wenn unter dem abziehbaren Mantelstreifen auf dem Trägerband ein Schutzfolienstreifen mittels einer Klebeschicht festgelegt ist, und daß die auf dem Trägerband befindliche haftvermittelnde Schicht sich über Schutzfolienstreifen hinweg erstreckt, sowie daß die Haftung zwischen dem Mantelstreifen und der Schutzfolie größer ist als zwischen der Klebeschicht und dem Trägerband. Durch diese erfindungsgemäße Ausgestaltung ist es möglich, daß der zwischen den Sollreißstellen ausgebildete Mantelstreifen abgezogen werden kann, wobei gleichzeitig mit dem Abziehen des Mantelstreifens auch die Schutzfolie von der Trägerbandoberfläche rückstandsfrei entfernt wird. Die erfindungsgemäß vorgesehene Schutzfolie besitzt den Vorteil, daß sie einen Oberflächenschutz für das Trägerband bei der Verformung des Trägerbandes zu Profilleisten darstellt. D. h., bei dem Verformungsvorgang durch Rollen können diese Rollen die Oberflächen des Trägerbandes nicht beschädigen, so daß der von der Schutzfolie abgedeckte Bereich eine glatte und glänzende Oberfläche behält. Damit wird durch die vorliegende Erfindung der zusätzliche Effekt bewirkt, daß der Verformungsvorgang der Profilleiste wesentlich vereinfacht werden kann, da nunmehr auf eine besonders sorgsame Verformung verzichtet werden kann, weil durch die Schutzfolie eine Beschädigung der den Zierstreifen bildenden Oberfläche auf jeden Fall verhindert wird.

Weitere vorteilhafte Ausführungsformen der Erfindung sind in den Unteransprüchen enthalten, wobei die Erfindung sich auch auf ein Verfahren zum Herstellen eines Profilkörpers bezieht.

Anhand der in den beiliegenden Zeichnungen dargestellten Ausführungsbeispiele wird die Erfindung nun näher erläutert. Es zeigen:

Fig. 1 einen Querschnitt durch eine Ausführungsform eines erfindungsgemäßen Profilkörpers,

Fig. 2 einen Querschnitt durch eine weitere Ausführungsform eines erfindungsgemäßen Profilkörpers,

Fig. 3 einen Querschnitt durch eine weitere alternative Ausführungsform eines erfindungsgemäßen Profilkörpers.

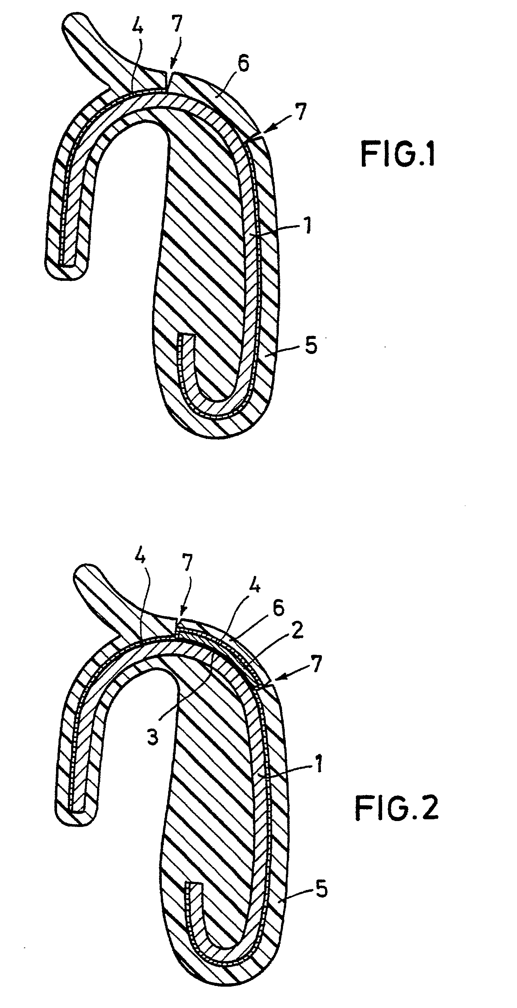

In Fig. 1 ist ein erfindungsgmäßer Profilkörper, insbesondere eine Profilleiste dargestellt, der aus einem Trägerband 1 aus Metall, insbesondere aus Stahl, besteht, das zu einem bestimmten Profil profiliert worden ist, wobei es jedoch im Rahmen der Erfindung liegt, jede gewünschte Form vorzusehen. Das Trägerband 1 ist mit einem Profilmantel 5 umgeben, der beispielsweise durch Extrusion aufgebracht wird. Dieser Mantel besteht vorzugsweise aus Kunststoff. Der Mantel 5 ist mit dem Trägerband 1 über eine haftvermittelnde Schicht 4 verbunden. Weiterhin ist ein abreißbarer Mantelstreifen 6 ausgebildet, dessen Längsränder von Sollreißstellen bzw. Sollbruchstellen 7 begrenzt werden. Diese Sollreißstellen können aus einer durchlaufenden Rille bestehen oder hinterher eingeschnitten werden. Der abreißbare Mantelstreifen ist dort ausgebildet, wo bei dem fertigen Profilkörper später ein Zierstreifen vorhanden sein soll, der im dargestellten Ausführungsbeispiel von dem unbedeckten Trägerband gebildet wird. Aufgrund dessen, daß die Haftfähigkeit zwischen der haftvermittelnden Schicht 4 und dem Mantel 5 sowie zwischen der haftvermittelnden Schicht und dem Trägerband größer ist als die Kraft, die zum Abreißen des Mantelstreifens 6 erforderlich ist, kann der Mantelstreifen leicht entfernt werden, ohne daß hierdurch im übrigen der Mantel von dem Trägerband auch nur partiell gelöst wird. Hierbei kann es zweckmäßig sein, wenn, was wie in Fig. 1 nicht dargestellt ist, noch zwischen dem Mantel im Bereich des abreißbaren Mantelstreifens 6 und der Trägerbandoberfläche eine Trennschicht aus einem geeigneten Material vorhanden ist. Diese Trennschicht bewirkt, daß ein Haften des Mantels auf der Trägerbandoberfläche verhindert wird, was insbesondere beim Extrudieren auftreten kann.

In Fig. 2 ist eine weitere erfindungsgemäße Ausführungsform eines Profilkörpers dargestellt. Hierbei ist eine Schutzfolie 2 an derjenigen Stelle des Trägerbandes 1 aufgebracht, an der am fertigen Profilkörper ein Zierstreifen vorhanden sein soll, d. h. ein Bereich, an dem die blanke Oberfläche des Trägerbandes nach außen in Erscheinung treten soll. Es liegt natürlich im Rahmen der Erfindung, auf dem Trägerband 1 auch mehrere Schutzfolien 2 nebeneinander anzuordnen. Die Schutzfolie 2 ist mit dem Trägerband 1 über eine Klebeschicht 3 verbunden. Weiterhin ist zu erkennen, daß das Trägerband 1 und die Schutzfolie 2 gemeinsam von der haftvermittelnden Schicht 4 überzogen sind. Dabei ist vorgesehen, daß die Haftfähigkeit der Klebeschicht 3 auf der Schutzfolie 2 größer ist als auf der Trägerbandoberfläche und die Haftfähigkeit der haftvermittelnden Schicht auf der Schutzfolie 2 größer ist als die Haftfähigkeit der Klebeschicht auf der Trägerbandoberfläche. Hierdurch wird erfindungsgemäß erreicht, daß beim Entfernen der Schutzfolie diese rückstandsfrei von der Trägerbandoberfläche entfernt werden kann. Vorteilhafterweise besteht die Schutzfolie aus Polyester oder Acrylat und besitzt eine Dicke von ca. 30 bis 100 μ. Die Klebeschicht 3 besteht aus einem wärmehärtbaren Kleber, der tränkmittelbeständig ist. Die erfindungsgemäß verwendete Schutzfolie muß wärmebeständig sein, und zwar für Kurzzeittemperaturen bis zu 240° C. Aufgrund dessen, daß die Haftfähigkeit zwischen der haftvermittelnden Schicht 4 und dem Mantel 5 im Bereich des Mantelstreifens 6 größer ist als die Haftfähigkeit der Klebeschicht 3 zur Oberfläche des Trägerbandes 1, erfolgt eine rückstandsfreie Entfernung 2 von der Trägerbandoberfläche, wenn der Mantelstreifen 6 aus der Profilleiste durch Herausreißen getrennt wird. An dem herausgerissenen Mantelstreifen 6 befindet sich dann die Schutzfolie 2 einschließlich der Klebeschicht 3, so daß die blanke Oberfläche als Zierstreifen zurückbleibt. Durch diese erfindungsgemäße Ausgestaltung des Profilkörpers werden folgende Vorteile erreicht:

1. die Schutzfolie stellt einen Schutz der Oberfläche des Trägerbandes beim Profilieren desselben dar,

2. die erfindungsgemäße Schutzfolie garantiert eine exakte Einhaltung des Zierstreifens bzw. der Zierleiste in bezug auf die Breite und Länge sowie den Ort an der Profilleiste,

3. durch die durchgehende haftvermittelnde Schicht 4 erfolgt eine Haftung des Mantels 5 bis unmittelbar an den Rand des Zierstreifens nach dem Entfernen der Schutzfolie, und

4. das Profilieren des Metallbandes und das Ummanteln können in einem Arbeitsgang erfolgen.

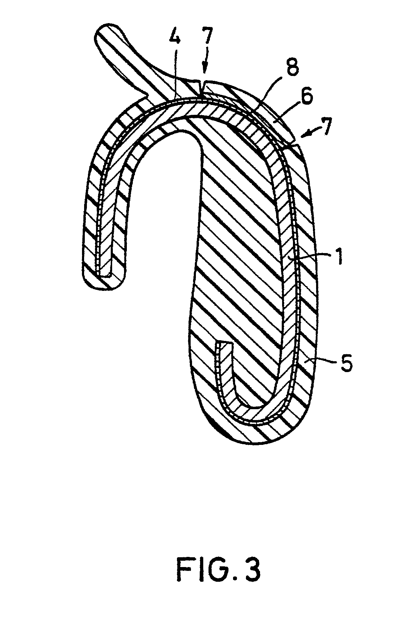

In Fig. 3 ist eine weitere Ausführungsform dargestellt, wobei gleiche Teile wie in den vorhergehenden Figuren mit denselben Bezugsziffern versehen sind. Hierbei ist die haftvermittelnde Schicht 4 durchgehend aufgebracht, d. h. sie verläuft auch im Bereich zwischen den Sollbruchstellen 7, d. h. im Bereich des abreißbaren Mantelstreifens 6. Auf der haftvermittelnden Schicht 4 im Bereich des Mantelstreifens 6 ist eine Zierfolie 8 aufgebracht, wobei die Haftfähigkeit der Zierfolie 8 auf der haftvermittelnden Schicht 4 größer ist als die des Mantelstreifens auf der Zierfolie. Hierbei kann, was nicht dargestellt ist, noch zusätzlich zwischen dem Mantelstreifen und der Zierfolie 8 eine Trennschicht aufgebracht sein. Die Zierfolie ist vorteilhafterweise als Metallfolie ausgebildet, wobei jedoch auch eine metallkaschierte Kunststoffolie verwendet werden kann. Diese Ausbildung hat den Vorteil, daß als Trägerband ein preiswertes Material verwendet werden kann, dessen Oberfläche nicht besonders behandelt sein muß, da der Zierstreifen von der Zierfolie gebildet wird und nicht von dem Trägerband selbst.

Als Material für die Herstellung der haftvermittelnden Schicht 4 sind insbesondere Haftvermittler geeignet, die auf einem Zwei-Schichten-Haftmittelsystem basieren, und zwar einem Primer aus chloriertem Kautschuk mit einem Zusatz von Phenolharzen und Füllstoffen sowie dem eigentlichen Haftvermittler aus halogenisiertem bzw. chloriertem Kautschuk unter Zugabe von Vernetzern und Füllstoffen. Die verwendeten Haftvermittler müssen temperaturbeständig sein, und zwar bis zu einem Bereich von ca. 240° C als Kurzzeittemperatur beim Einbrennen des Haftvermittlers. Darüber hinaus müssen sie auch temperaturbeständig sein im Hinblick auf die Vulkanisation eines Mantelmaterials auf das Trägerband. Dabei liegen die Vulkanisationstemperaturen im Bereich von 180° bis 235° C, und zwar für eine Zeitdauer von 1 bis 5 Minuten. Als Mantelmaterialien kommen die bekannten Kunststoffe wie z. B. PVC, PUR in Frage sowie Gummi. Als haftvermittelnde Materialien werden auf die Mantelmaterialien abgestimmte Systeme verwendet.

Zur Herstellung des erfindungsgemäßen Profilkörpers gemäß Fig. 2 wird vorteilhafterweise ein Verfahren benutzt, bei dem zum Profilieren und zum nachfolgenden Aufbringen des Mantels ein Trägerband verwendet wird, auf dem ein Schutzfolienstreifen mittels der Klebeschicht 3 sowie über den Schutzfolienstreifen hinweg eine sich erstreckende haftvermittelnde Schicht 4 vorgesehen ist, wobei die Haftung zwischen der haftvermittelnden Schicht 4, dem Schutzfolienstreifen 2 der Klebeschicht 3 größer ist als die Haftung zwischen dieser Klebeschicht und dem Trägerband.

## Patentansprüche

1. Profilkörper, insbesondere Profilleiste, bestehend aus einem profilierten Trägerband (1) aus Metall sowie aus einem auf diesem aufgebrachten Mantel (5) aus Kunststoff oder Gummi, in dem Sollbruchstellen (7) zum Abziehen mindestens eines Mantelstreifens (6) und zum Freilegen eines darunterliegenden Zierabschnitts am Trägerband (1) angeordnet sind, **dadurch gekennzeichnet**, daß der Mantel (5) mindestens in einem Bereich außerhalb des zwischen den Sollbruchstellen (7) angeordneten Mantelstreifens (6) auf dem Trägerband (1) durch eine haftvermittelnde Schicht (4) fixiert ist, deren Haftkraft am Mantel und am Trägerband größer ist als die zum Abreißen des Mantelstreifens (6) erforderliche Kraft.

2. Profilkörper nach Anspruch 1, **dadurch gekennzeichnet**, daß sich die haftvermittelnde Schicht (4) über die gesamte Oberfläche des Trägerbandes (1) außerhalb des abziehbaren Mantelstreifens erstreckt.

3. Profilkörper nach Anspruch 1 oder 2, **dadurch gekennzeichnet**, daß im Bereich des abziehbaren Mantelstreifens (6) auf dem Trägerband (1) ein Trennmittel aufgebracht ist.

4. Profilkörper nach Anspruch 2, **dadurch gekennzeichnet**, daß unter dem abziehbaren Mantelstreifen (6) auf dem Trägerband (1) ein Schutzfolienstreifen (2) mittels einer Klebeschicht (3) festgelegt ist, daß die auf dem Trägerband (1) befindliche haftvermittelnde Schicht (4) sich über den Schutzfolienstreifen (2) hinwegerstreckt, und daß die Haftung zwischen dem Mantelstreifen (6) und der Schutzfolie (2) größer ist als zwischen der Klebeschicht (3) und dem Trägerband (1).

5. Profilkörper nach Anspruch 4, **dadurch gekennzeichnet**, daß der Schutzfolienstreifen (2) aus Polyester oder Acrylat besteht und eine Dicke von etwa 30 bis 100 µ aufweist.

6. Profilkörper nach Anspruch 4 oder 5, **dadurch gekennzeichnet**, daß der Schutzfolienstreifen (2) kurzzeitig bis zu einer Temperatur von etwa 240° C beständig ist.

7. Profilkörper nach Anspruch 1, **dadurch gekennzeichnet**, daß sich die haftvermittelnde Schicht (4) über die gesamte Oberfläche des Trägerbandes (1) erstreckt und im Bereich zwischen den Sollbruchstellen (7) auf der haftvermittelnden Schicht (4) eine Zierfolie (8) aufgebracht ist, wobei die Haftfestigkeit der Zierfolie (8) auf der haftvermittelnden Schicht (4) größer ist als die des Mantelstreifens (6) auf der Zierfolie.

8. Profilkörper nach Anspruch 7, **dadurch gekennzeichnet**, daß zwischen dem Mantelstrei fen (6) und der Zierfolie (8) eine Trennschicht aufgebracht ist.

9. Profilkörper nach Anspruch 7 oder 8, **dadurch gekennzeichnet**, daß die Zierfolie (8) eine metallkaschierte Kunststoffolie ist.

10. Profilkörper nach Anspruch 7 oder 8, **dadurch gekennzeichnet**, daß die Zierfolie (8) eine Metallfolie ist.

11. Profilkörper nach einem oder mehreren der Ansprüche 1 bis 10, **dadurch gekennzeichnet**, daß die haftvermittelnde Schicht (4) aus zwei Lagen zusammengesetzt ist, von denen die eine aus chloriertem Kautschuk, Phenolharzen und Füllstoffen und die andere aus halogenisiertem, insbesondere chloriertem Kautschuk, einem Vernetzer und Füllstoffen besteht.

12. Verfahren zum Herstellen eines Profilkörpers nach einem oder mehreren der Ansprüche 4 bis 6 und 11, **dadurch gekennzeichnet**, daß zum Profilieren und zum nachfolgenden Aufbringen des Mantels (5) ein Trägerband (1) verwendet wird, auf dem ein Schutzfolienstreifen (2) mittels einer Klebeschicht (3) sowie eine über den Schutzfolienstreifen (2) sich erstreckende haftvermittelnde Schicht vorgesehen ist, wobei die Haftung zwischen der haftvermittelnden Schicht, dem Schutzfolienstreifen (2) und der Klebeschicht (3) größer ist als die Haftung zwischen dieser Klebeschicht (3) und dem Trägerband (1).

13. Verfahren nach Anspruch 12, **dadurch gekennzeichnet**, daß ein Schutzfolienstreifen (2) aus Polyester oder Acrylat mit einer Dicke von etwa etwa 30 bis 100 µ verwendet wird.

14. Verfahren nach Anspruch 12 oder 13, **dadurch gekennzeichnet**, daß ein Schutzfolienstreifen (2) verwendet wird, der kurzzeitig bis zu einer Temperatur von etwa 240° C beständig ist.

15. Verfahren nach einem oder mehreren der Ansprüche 12 bis 14, **dadurch gekennzeichnet**, daß die haftvermittelnde Schicht aus zwei Lagen aufgebaut wird, von denen die eine aus chloriertem Kautschuk, Phenolharzen und Füllstoffen und die andere aus halogenisiertem, insbesondere chloriertem Kautschuk, einem Vernetzer und Füllstoffen gebildet wird.

## Claims

1. Profiled body, especially profiled rail, comprising a profiled carrier band (1) of metal and, disposed thereon, a sheath (5) of plastics material or rubber in which intended break points (7) are made for removing at least one sheath strip (6) and for exposing an underlying ornamental section on the carrier band (1), characterized in that the sheath (5) is fixed in at least one region outside the sheath strip (6) arranged between the intended break points (7) on the carrier band (1) by an adherence-promoting layer (4) whereof the force of adherence on the sheath and on the carrier band is greater than the force required to tear off the sheath strip (6).

2. Profiled body according to Claim 1, characterized in that the adherence-promiting layer (4) extends over the entire surface of the carrier band (1) outside the removable sheath strip.

3. Profiled body according to Claim 1 or 2, characterized in that a separating agent is disposed in the region of the removable sheath strip (6), on the carrier band (1).

4. Profiled body according to Claim 2, characterized in that, under the removable sheath strip (6), on the carrier band (1), there is fixed by means of an adhesive layer (3) a protective foil strip (2), in that the adherence-promoting layer (4) on the carrier band (1) extends beyond the protective foil strip (2), and in that the adherence between the sheath strip (6) and the protective foil (2) is greater than between the adhesive layer (3) and the carrier band (1).

6. Profiled body according to Claim 4, characterized in that the protective foil strip (2) comprises polyester or acrylate and has a thickness of approximately 30 to 100 μ.

6. Profiled body according to Claim 4 or 5, characterized in that the protective foil strip (2) is resistant for short periods up to a temperature of approximately 240°C.

7. Profiled body according to Claim 1, characterized in that the adherence-promoting layer (4) extends over the entire surface of the carrier band (1) and there is disposed in the region between the intended break points (7) on the adherence- promoting layer (4) an ornamental foil (8), the adherence of the ornamental foil (8) on the adhesion-promoting layer (4) being greater than that of the sheath strip (6) on the ornamental foil.

8. Profiled body according to Claim 7, characterized in tht a separating layer is disposed between the sheath strip (6) and the ornamental foil (8).

9. Profiled body according to Claim 7 or 8, characterized in that the ornamental foil (8) is a metal-coated plastics foil.

10. Profiled body according to Claim 7 or 8, characterized in that the ornamental foil (8) is a metal foil.

11. Profiled body according to one or more of Claims 1 to 10, characterized in that the adherence-promoting layer (4) is composed of two layers, whereof one comprises chlorinated rubber, phenol resins and fillers and the other comprises halogenated, in particular chlorinated, rubber, a cross-linking agent and fillers.

12. Process for producing a profiled body according to one or more of Claims 4 to 6 and 11, characterized in that a carrier band (1) is used for profiling and for the sheath (5) to be subsequently disposed on, there being provided on this carrier band (1) a protective foil strip (2) by means of an adhesive layer (3) and an adherence-promoting layer extending beyond the protective foil strip (2), the adcherence between the adherence-promoting layer, the protective foil strip (2) and the adhesive layer (3) being greater than the adherence between this adhesive layer (3) and the carrier band (1).

13. Process according to Claim 12, characterized in that a protective foil strip (2) of polyester or acrylate having a thickness of approximately 30 to 100 μ is used.

14. Process according to Claim 12 or 13, characterized in that a protective foil strip (2) is used which is resistant for short periods up to a temperature of approximately 240°C.

15. Process according to one or more of Claims 12 to 14, characterized in that the adherence-promoting layer is built up from two layers, whereof one is formed from chlorinated rubber, phenol resins and fillers and the other is formed from halogenated, in particular chlorinated, rubber, a cross-linking agent and fillers.

## Revendications

1. Corps profilé, notamment pour moulure de recouvrement, se composant d'une bande métallique de support (1) ainsi que d'une chemise (5) en matière plastique ou caoutchouc, dans laquelle sont ménagées des zones de rupture (7) permettant d'enlever au moins un tronçon de chemise (6) et de mettre à nu sur la bande de support (1) un tronçon décoratif sous-jacent, caractérisé en ce que la chemise (5) est fixée sur la bande de support (1), au moins dans une zone située en dehors du tronçon de chemise (6) disposé entre les zones de rupture (7), par une couche adhésive (4) dont la force d'adhérence sur la chemise et sur la bande de support est supérieure à la force nécessaire pour enlever le tronçon de chemise (6).

2. Corps profilé selon la revendication 1, caractérisé en ce que la couche adhésive (4) s'étend sur toute la surface de la bande de support (1) en dehors du tronçon de chemise enlevable.

3. Corps profilé selon la revendication 1 ou 2, caractérisé en ce qu'un moyen de séparation est appliqué sur la bande de support (1) dans la zone du tronçon de chemise enlevable (6).

4. Corps profilé selon la revendication 2, caractérisé en ce que, sous le tronçon de chemise enlevable (6), est fixé, sur la bande de support (1), un tronçon de feuille de protection (2), au moyen d'une couche de colle (3), de sorte que la couche adhésive disposée sur la bande de support (1) s'étend par dessus le tronçon de feuille de protection (2) et que l'adhérence entre le tronçon de chemise (6) et la feuille de protection (2) est supérieure à celle entre la couche de colle (3) et la bande de support (1).

5. Corps profilé selon la revendication 4, caractérisé en ce que le tronçon de feuille de protection (2) est en polyester ou acrylate et présente une épaisseur comprise entre 30 et 100 microns environ.

6. Corps profilé selon la revendication 4 ou 5, caractérisé en ce que le tronçon de feuille de protection (2) peut supporter temporairement une température d'environ 240°C.

7. Corps profilé selon la revendication 1, caractérisé en ce que la couche adhésive (4) s'étend sur toute la surface de la bande de support (1) et qu'une feuille décorative (8) est appliquée sur la couche adhésive (4) dans la zone comprise entre les zones de rupture (7), de manière telle que la force d'adhérence de la feuille décorative (8) sur la couche adhésive (4) est supérieure à celle du tronçon de chemise (6) sur la feuille décorative.

8. Corps profilé selon la revendication 7, caractérisé en ce qu'une couche de séparation est appliquée entre le tronçon de chemise (6) et la feuille décorative (8).

9. Corps profilé selon la revendication 7 ou 8, caractérisé en ce que la feuille décorative (8) est une feuille en matière plastique métallisée.

10. Corps profilé selon la revendication 7 ou 8, caractérisé en ce que la feuille décorative (8) est une feuille métallique.

11. Corps profilé selon une ou plusieurs des revendications 1 à 10, caractérisé en ce que la couche adhésive (4) se compose de deux couches, dont l'une est en caoutchouc chloré, résine phénolique et charges et l'autre est en caoutchouc halogénisé, notamment chloré, un agent de réticulation et charges.

12. Procédé pour la réalisation d'un corps profilé selon l'une ou plusieurs des revendications 4 à 6 et 11, caractérisé en ce que, pour le profilage et pour l'application ultérieure de la chemise (5), on utilise une bande de support (1), sur laquelle on fixe un tronçon de feuille de protection (2) à l'aide d'une couche de colle (3), ainsi qu'une couche adhésive s'étendant sur le tronçon de feuille de protection (2), de manière telle que la force d'adhérence entre la couche adhésive, le tronçon de feuille de protection (2) et la couche de colle (3) est supérieure à la force d'adhérence entre cette couche de colle (3) et la bande de support (1).

13. Procédé selon la revendication 12, caractérisé en ce que l'on utilise un tronçon de feuille de protection (2) en polyester ou acrylate avec une épaisseur d'environ 30 à 100 microns.

14. Procédé selon la revendication 12 ou 13, caractérisé en ce que l'on utilise un tronçon de feuille de protection (2), apte à supporter temporairement une température d'environ 240°C.

15. Procédé selon l'une ou plusieurs des revendications 12 à 14, caractérisé en ce que la couche adhésive se compose de deux couches dont l'une en caoutchouc chloré, résine phénolique et charges et l'autre en caoutchouc halogéné, notamment chloré, un agent de réticulation et charges.

EP 0 237 036 B1

FIG.1

FIG.2

EP 0 237 036 B1

FIG. 3